# EUROPÄISCHE PATENTSCHRIFT

(11) **EP 3 191 425 B1**
(45) Veröffentlichungstag und Bekanntmachung des Hinweises auf die Patenterteilung: **20.11.2019**
(21) Anmeldenummer: 15762570.8
(22) Anmeldetag: 09.09.2015
(51) Int. Cl.: C04B 7/44

(54) **VERFAHREN UND ANLAGE ZUR THERMISCHEN BEHANDLUNG VON FLUGFÄHIGEM ROHMATERIAL**
METHOD AND DEVICE FOR THE THERMAL TREATMENT OF DISPERSIBLE RAW MATERIAL
PROCÉDÉ ET INSTALLATION DE TRAITEMENT THERMIQUE D'UNE MATIÈRE PREMIÈRE DISPERSIBLE

(30) Priorität: 11.09.2014 DE 102014113127
(43) Veröffentlichungstag der Anmeldung: 19.07.2017
(73) Patentinhaber: thyssenkrupp Industrial Solutions AG, 45143 Essen (DE); thyssenkrupp AG, 45143 Essen (DE)
(72) Erfinder: KLEGRAF, Daniel, 59555 Lippstadt (DE); FRIE, Sebastian, 48165 Münster (DE); BRINKSCHULTE, Henning, 48155 Münster (DE)
(74) Vertreter: thyssenkrupp Intellectual Property GmbH
(86) Internationale Anmeldenummer: PCT/EP2015/070578
(87) Internationale Veröffentlichungsnummer: WO 2016/038076

(56) Entgegenhaltungen:
- DE-A1-102012 022 179

## Beschreibung

Die Erfindung betrifft ein Verfahren und eine Anlage zur thermischen Behandlung von flugfähigem Rohmaterial, wobei das Rohmaterial in ein von Heißgas/Heißgasen durchströmtes Steigrohr eingeführt und dort durch das Heißgas bzw. die Heißgase thermisch behandelt wird.

Diese Art der thermischen Behandlung findet beispielsweise bei der Calcination von Zementrohmaterial bei der Zementklinkerherstellung statt. Die hierfür erforderliche thermische Energie wird durch Brennstoff bereitgestellt, der beispielsweise in einer an das Steigrohr angeschlossenen, separaten Brennkammer verbrannt wird (DE 10 2004 045 510 A1). Ein ähnliches Konzept ist aus der DE 195 35 312 A1 bekannt, die einen an die Abgasleitung angebundenen Reaktor zur Erzeugung eines Brenngases aus Abfallstoffen, insbesondere aus Altreifen, offenbart. Der Reaktor ist dabei als Vergasungsreaktor ausgebildet und mit dem Kühler einer Zementklinkeranlage über eine Tertiärluftleitung derart verbunden, dass wenigstens ein Teil der Abluft des Kühlers als Vergasungsmittel im Reaktor verwendbar ist. Gemäß der DE 10 2005 052 753 A1 wird der zusätzliche Verbrennungsbereich als Unterschubfeuerung ausgebildet.

Weiterhin wird in der DE 10 2012 022 179 A1 eine an einen Calcinator angeschlossene Vorrichtung zur Verbrennung von stückigen Brennstoffen mit einem Brennraum beschrieben. Die für die Verbrennung erforderliche Luft wird über eine am vom Calcinator abgewandten Ende der Brennkammer angeschlossene Tertiärluftleitung zugeführt. Die bei der Verbrennung entstehende Wärme wird gemeinsam mit der eingeleiteten Tertiärluft in den Calcinator geführt.

Bei all diesen unterschiedlich ausgebildeten Brennkammern wird heiße Abluft des Kühlers genutzt, um den Brennstoff umzusetzen, wobei die entstehenden Heißgase dem Calcinator zugeführt werden. Rohmehl wird dabei zur Temperaturregelung eingesetzt. Nachteil dieser Konzepte ist der hohe apparative Aufwand, der mit der Zuführung der heißen Abluft des Kühlers und dem Rohmehl über separate Leitungen verbunden ist. Insbesondere die Mehlzuführung verhindert in vielen bestehenden Anlagen eine Nachrüstung der Technik, da kein ausreichender Höhenunterschied vorhanden ist, um das Rohmehl mittels Schwerkraft zuführen zu können.

Die WO 2012/048159 A2 verfolgt hingegen ein anderes Konzept, bei dem fester Brennstoff, beispielsweise Altreifen, über eine schwenkbare Halterungseinrichtung direkt im Steigrohr verbrannt werden. Dieses Verfahren hat zwar den Vorteil, dass der apparative Aufwand bezüglich der Tertiärluftleitungen entsprechend reduziert werden kann, jedoch wegen der extrem hohen Temperaturen ein entsprechend hoher Aufwand für die Halterungsvorrichtung in Kauf genommen werde muss.

Der Erfindung liegt daher die Aufgabe zugrunde, den apparativen Aufwand bei der Umsetzung des Brennstoffs für die thermische Behandlung von flugfähigem Rohmaterial in einem von Heißgasen durchströmten Steigrohr zu reduzieren.

Erfindungsgemäß wird diese Aufgabe durch die Merkmale der Ansprüche 1 und 6 gelöst. Besondere Ausgestaltungen der Erfindung sind Gegenstand der weiteren Ansprüche.

Beim erfindungsgemäßen Verfahren zur thermischen Behandlung von flugfähigem Rohmaterial wird das Rohmaterial in ein von Heißgasen durchströmtes Steigrohr eingeführt und dort durch die Heißgase thermisch behandelt. Dem Steigrohr wird weiterhin mindestens ein Brennstoff zugeführt, wobei der Brennstoff zunächst in einem Brennstoff-Konditionierungsbereich auf wenigstens einer Auflagefläche verweilt, wo er mit einem Teil des mit dem Rohmaterial vermischten Heißgases in Kontakt kommt und dadurch getrocknet und/oder wenigstens teilweise entgast und/oder wenigstens teilweise umgesetzt wird, um anschließend in das Steigrohr überzugehen.

Unter dem Begriff "Heißgas" sind insbesondere Rauchgase, höchstvorzugsweise Rauchgase aus einem Ofen bzw. einer Wärmebehandlungsanlage zu verstehen, die mit weiteren Behandlungsgasen vermischt sein können.

Die Erfindung macht daher für die Umsetzung des Brennstoffs von den Heißgasen Gebrauch, sodass auf den hohen apparativen Aufwand durch ansonsten entsprechend groß dimensionierte Tertiärluftleitungen bzw. eine zusätzliche Tertiärluftleitung auf den Brennstoff-Konditionierungsbereich verzichtet werden kann. Ein weiterer Vorteil besteht darin, dass sich die Temperaturregelung bei der Umsetzung des Brennstoffs aufgrund des geringeren Sauerstoffgehalts der verwendeten Heißgase erheblich erleichtert wird. Auch das mit den Heißgasen mitgeführte Rohmehl verhindert übermäßige Temperaturspitzen.

Die hinter der Erfindung stehende Idee besteht darin, dass der Brennstoff im gesamten Brennstoff-Konditionierungsbereich vorrangig, also zu wenigstens 50%, durch das mit dem Rohmaterial vermischte Heißgas getrocknet und/oder wenigstens teilweise entgast und/oder wenigstens teilweise umgesetzt wird.

Der Brennstoff im Brennstoff-Konditionierungsbereich kommt dabei mit heißen Gasen in Kontakt, die zu wenigstens 50%, vorzugsweise wenigstens 60% oder wenigstens 70% oder wenigstens 80% und höchstvorzugsweise zu wenigstens 90% durch einen Teil des mit dem Rohmaterial vermischten Heißgases gebildet werden. Der verbleibende Teil wird beispielsweise durch Gas zum Fördern des Brennstoffs entlang der Auflagefläche und/oder über Treibstrahldüsen zugeführte Luft gebildet, wobei die über Treibstrahldüsen zugeführte Luft zur Umlenkung des Rauchgases in den Brennstoff-Konditionierungsbereich und/oder zur Einstellung des Sauerstoffgehalts der Heißgase im Bereich des Brennstoff-Konditionierungsbereich dienen kann.

Erfindungsgemäß ist die wenigstens eine Auflagefläche des Brennstoff-Konditionierungsbereichs in einer Konditionierungskammer angeordnet, die offen in das Steigrohr mündet, wobei ein Teil der mit dem Rohmaterial vermischten Heißgase aus dem Steigrohr in die Konditionierungskammer umgelenkt und mit dem Brennstoff in Kontakt kommt. Auf diese Weise können insbesondere auch Sekundärbrennstoffe bzw. feuchte Brennstoffe zum Einsatz kommen, da sie in der Konditionierungskammer zunächst getrocknet und wenigstens teilweise entgast und umgesetzt werden. Der Brennstoff wird dabei vorzugsweise mechanisch oder über Schwerkraft der Auflagefläche zugeführt. Der getrocknete und/oder wenigstens teilweise entgaste Brennstoff wird dann mechanisch oder pneumatisch entlang der Auflagefläche gefördert und in das Steigrohr abgeworfen bzw. geht in das Steigrohr über, wo er dann fertig umgesetzt bzw. verbrannt wird.

Je nach Sauerstoffgehalt der das Steigrohr durchströmenden Heißgase kann es wünschenswert sein, den Sauerstoffgehalt der mit dem Brennstoff in Kontakt kommenden Heißgase durch Zugabe von sauerstoffhaltigem Gas gezielt einzustellen, um die Konditionierung bzw. den Umsatz des Brennstoffs zu optimieren. Dabei kann diese Zugabe von sauerstoffhaltigem Gas auch dazu verwendet werden, die Heißgase in die Konditionierungskammer umzulenken, um dadurch die Menge der Heißgase, die mit dem Brennstoff im Brennstoff-Konditionierungsbereich in Kontakt kommen, gezielt einzustellen.

Weiterhin ist es wünschenswert, wenn der Brennstoff nicht schon im Brennstoff-Konditionierungsbereich vollständig umgesetzt wird, um so den Energieeintrag durch den Brennstoff über die Länge des Steigrohres zu verteilen. Der Brennstoff sollte daher zum Zeitpunkt des Abwurfs in das Steigrohr zu weniger als 90%, vorzugsweise weniger als 70%, höchstvorzugsweise weniger als 50%, umgesetzt sein. Weiterhin ist es von Vorteil, wenn der Brennstoff zum Zeitpunkt des Abwurfs in das Steigrohr zu wenigstens 70% entgast ist. Dadurch wird sichergestellt, dass der Brennstoff, der dann im Steigrohr mit den Heißgasen mitgenommen wird, noch innerhalb des Steigrohres vollständig umgesetzt werden kann.

Gemäß einer weiteren Ausgestaltung der Erfindung kann vorgesehen werden, dass der auf der Auflagefläche befindliche Brennstoff mittels inertem Material, wie beispielsweise Sand oder Kalksteinmehl bei Bedarf abgelöscht werden kann.

Die erfindungsgemäße Anlage zur thermischen Behandlung von flugfähigem Rohmaterial sieht ein von Heißgasen durchströmtes Steigrohr, Mittel zur Zugabe des Rohmaterials und einen an das Steigrohr angeschlossenen Brennstoffkonditionierungsbereich vor, wobei der Brennstoffkonditionierungsbereich Mittel zur Zugabe von Brennstoff, wenigstens eine Auflagefläche für den Brennstoff und Mittel zum Fördern des Brennstoffs entlang der Auflagefläche und Übergeben des Brennstoffs in das Steigrohr umfasst, wobei die wenigstens eine Auflagefläche des Brennstoff-Konditionierungsbereichs in einer Konditionierungskammer angeordnet ist, die offen in das Steigrohr mündet . Ferner sind Umlenkmittel zur Umlenkung eines Teils der mit dem Rohmaterial vermischten Heißgase in den Brennstoffkonditionierungsbereich zur Trocknung und/oder wenigstens teilweisen Entgasung und/oder wenigstens teilweisen Umsetzung des Brennstoffs vorgesehen.

Die Mittel zur Zugabe des Brennstoffs können beispielsweise Schnecken und/oder Schieber und/oder Pumpen und/oder Stößel und/oder Schurren und/oder Zellenradschleusen und/oder ein Klappensystem umfassen. Die Mittel zum Fördern und Übergeben des Brennstoffs in das Steigrohr können in Form von Schiebern oder Stößeln zur mechanischen Förderung und/oder Luftstoßgeräten oder Gebläsen zur pneumatischen Förderung gebildet werden. Zur Umlenkung des Teils der mit dem Rohmaterial vermischten Heißgase in den Brennstoffkonditionierungsbereich können Treibstrahldüsen vorgesehen werden. Diese Düsen können mit sauerstoffhaltigem Gas beaufschlagt werden, um den Sauerstoffgehalt der Heißgase im Brennstoffkonditionierungsbereich gezielt einzustellen.

Damit für den Brennstoff ein ausreichender Platz zu seiner Umsetzung zur Verfügung steht, sollte das Verhältnis des Durchmessers D des Steigrohres zur Tiefe T der Auflagefläche des Brennstoffs im Brennstoff-Konditionierungsbereich 5 > D/T > 1,5, vorzugsweise 3 > D/T 1,5 betragen. Die Neigung der Auflagefläche des Brennstoffs gegenüber der Horizontalen sollte im Bereich von +45° bis -50°, vorzugsweise im Bereich von 0 bis -30°, höchstvorzugsweise im Bereich von 0 bis - 10° liegen.

Weiterhin hat es sich als vorteilhaft erwiesen, wenn die Auflagefläche durch wenigstens zwei aufeinanderfolgende Stufen gebildet wird, da es bei der Bewegung des Brennstoffs von Stufe zu Stufe zu einer Vermischung bzw. Verwirbelung des Brennstoffs kommt und dadurch eine schnellere Umsetzung ermöglicht wird. Das Verhältnis von der Höhe des Brennstoffkonditionierungsbereichs zu der Tiefe der Auflagefläche oder Stufe beträgt vorzugsweise zwischen 0,5 und 2, vorzugsweise 0,75 und 1,5. Es ist natürlich auch denkbar, dass die Auflagefläche durch einen Tisch und wenigstens eine sich daran anschließende Stufe gebildet wird, wobei die Länge der einzelnen Stufe 0,2 bis 1, vorzugsweise 0,2 bis 0,6 mal der Länge des Tisches beträgt. Das Verhältnis der Breite zu Tiefe der Auflagefläche liegt vorteilhafterweise zwischen 0,5 und 2,5, vorzugsweise 1 und 2.

Gemäß einem weiteren Ausführungsbeispiel wird der Brennstoff-Konditionierungsbereich durch eine in einem schräg zur Vertikalen angeordneten Abschnitt des Steigrohrs ausgebildete Konditionierungskammer gebildet, wobei die wenigstens eine Auflagefläche für den Brennstoff durch einen entsprechend ausgebildeten Wandbereich des Steigrohres gebildet wird. Die zur Umlenkung des Teils der mit dem Rohmaterial vermischten Heißgase in den Brennstoffkonditionierungsbereich vorgesehenen Umlenkmittel können beispielsweise durch Treibstrahldüsen gebildet werden.

Weitere Vorteile und Ausgestaltungen der Erfindung werden anhand der nachfolgenden Beschreibung einiger Ausführungsbeispiele und der Zeichnung näher erläutert.

In der Zeichnung zeigen
- Fig. 1: eine schematische Ansicht einer Anlage zur Herstellung von Zementklinker,
- Fig. 2: eine schematische Ansicht einer Anlage zur thermischen Behandlung von flugfähigem Rohmaterial gemäß einem ersten Ausführungsbeispiel,
- Fig. 3: eine schematische Ansicht einer Anlage zur thermischen Behandlung von flugfähigem Rohmaterial gemäß einem zweiten Ausführungsbeispiel und
- Fig. 4: eine schematische Ansicht einer Anlage zur thermischen Behandlung von flugfähigem Rohmaterial gemäß einem dritten Ausführungsbeispiel.

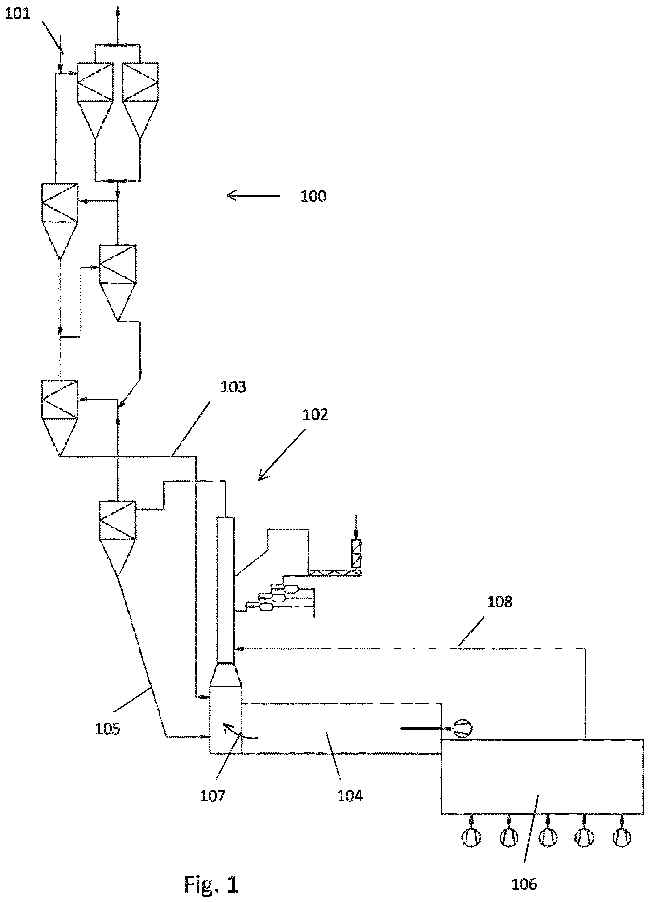

Fig. 1 zeigt eine Anlage zur Herstellung von Zementklinker mit einem mehrstufigen Vorwärmer 100 zum Vorwärmen von Zementrohmehl 101, einem Calcinator 102 zum Vorcalcinieren des vorgewärmten Zementrohmehls 103, einen Ofen 104 zum Brennen des vorcalcinierten Zementrohmehls 105 zu Zementklinker und einen Kühler 106 zum Kühlen des Zementklinkers. Die im Ofen 104 entstehenden Heißgase 107 durchströmen zunächst den Calcinator 102 und anschließend den Vorwärmer 100. Ferner wird eine im Kühler 106 entstehende Kühlerabluft 108 als Verbrennungsluft im Calcinator 102 genutzt.

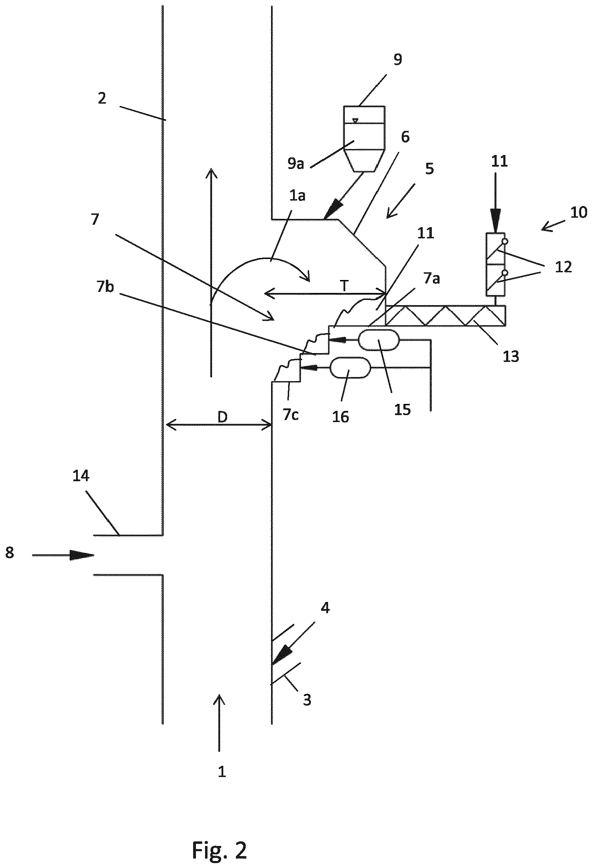

Anhand der Figuren 2 bis 4 werden verschiedene Ausführungsbeispiele für die Ausbildung des Calcinators gezeigt. Diese Ausführungsbeispiele können aber auch weitere Anlagen zur thermischen Behandlung oder chemischen Umsetzung von flugfähigem Rohmaterial, wie beispielsweise der Erzreduktion betreffen und sind daher nicht auf einen Calcinator beschränkt.

Die im Fig. 2 dargestellte Anlage zur thermischen Behandlung von flugfähigem Rohmaterial weist ein von Heißgasen 1 durchströmtes Steigrohr 2, Mittel 3 zur Zugabe des Rohmehls 4 (insbesondere vorgewärmtes Zementrohmehls 103 der Fig. 1) und einen Brennstoffkonditionierungsbereich 5, der als Konditionierungskammer am Steigrohr 2 angebracht ist und offen in das Steigrohr 2 mündet. Die Konditionierungskammer weist eine Auflagefläche 7 für Brennstoff 11 auf, die durch einen Tisch 7a und zwei sich in Richtung Steigrohr anschließende Stufen 7b, 7c gebildet wird. Weiterhin sind Mittel 10 zur Zugabe von Brennstoff 11 vorgesehen, die im dargestellten Ausführungsbeispiel Pendelklappen 12 und eine Schnecke 13 umfassen.

Über die Mittel 10 wird der Brennstoff 11 auf die Auflagefläche 7 geschoben. Das thermisch zu behandelnde Rohmaterial 4 wird in einem unteren Bereich des Steigrohres 1 über die Mittel 3 zugeführt. Weiterhin kann dem Steigrohr 2 über Mittel 14 sauerstoffhaltige Verbrennungsluft 8 (beispielsweise Kühlerabluft 107 gemäß Fig. 1) zugeführt werden. Die Konditionierungskammer 6 ist derart an das Steigrohr 2 angeschlossen, dass ein Teil 1a der mit dem Rohmaterial 4 vermischten Heißgase 1 nach Art einer Kehrströmung in die Konditionierungskammer 6 gelangt und dort mit dem auf der Auflagefläche 7 verweilenden Brennstoff 11 in Kontakt kommt, der dadurch getrocknet und/oder teilweise entgast und/oder wenigstens teilweise umgesetzt wird. Nach einer ausreichenden Verweilzeit auf dem Tisch 7a wird der Brennstoff auf die Stufe 7b geschoben, indem neuer Brennstoff über die Schnecke 13 nachgeschoben wird. Zum Transport des Brennstoffs von der Stufe 7b auf die Stufe 7c bzw. zum Abwurf des Brennstoffs von der Stufe 7c in das Steigrohr 2 sind im Bereich der Stufen Luftstoßgeräte 15, 16 vorgesehen. Es könnten aber auch Gebläse, Schieber oder Stößel zur Anwendung kommen. Durch eine nicht näher dargestellte Steuerung, werden die Schnecke 13 und die Luftstoßgeräte 15, 16 aufeinander abgestimmt betätigt, sodass der Brennstoff mit vorgegebener Zeit im Brennstoffkonditionierungsbereich 5 verweilt und dort in der gewünschten Art und Weise umgesetzt wird.

Weiterhin kann ein Bunker 9 für inertes Material 9a vorgesehen werden, um beispielsweise bei einem plötzlichen Anlagenstopp den noch laufenden Brennstoffumsatz durch ein Überdecken des Brennstoffbetts mit intertem Material (beispielsweise Sand oder Kalksteinmehl) zu verlangsamen oder weitestgehend zum Erliegen zu bringen.

Der in das Steigrohr 2 abgeworfene Brennstoff wird vom Heißgas mitgerissen und weiter umgesetzt bzw. verbrannt. Der Effekt der "Kehrströmung", bei dem der Teil 1a der im Steigrohr 2 nach oben strömenden Heißgase 1 in die Konditionierungskammer 6 gelangt, wird dann besonders effektiv erreicht, wenn das Verhältnis des Durchmessers D des Steigrohrs 2 zur Tiefe T der Auflagefläche 7 des Brennstoffs im Brennstoffkonditionierungsbereich 5 im Bereich von 5 > D/T > 1,5, vorzugsweise von 3 > D/T > 1,5 liegt.

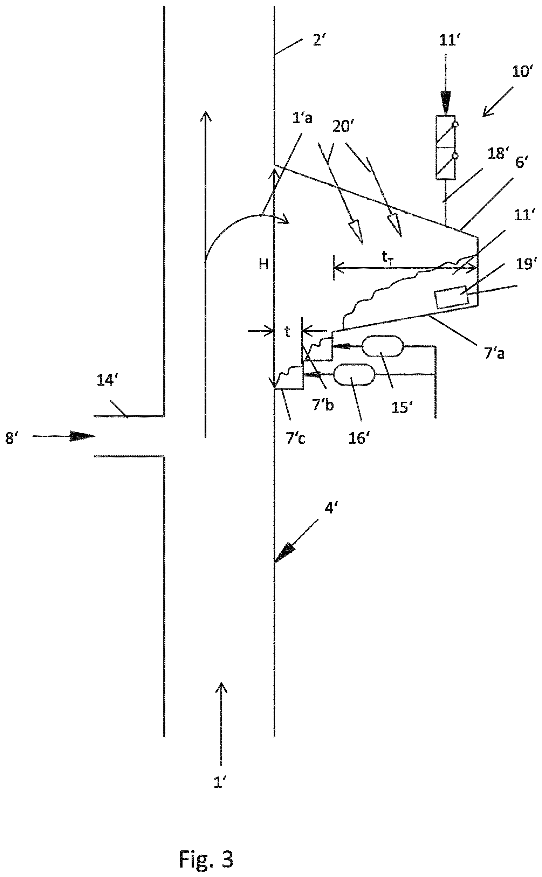

Fig. 3 zeigt ein Ausführungsbeispiel, bei dem die Konditionierungskammer 6' wiederum offen in das Steigrohr 2' mündet. Die Mittel 10' zur Zugabe des Brennstoffs werden wiederum durch Pendelklappen 12', 13' und eine Schurre 18' gebildet, sodass der Brennstoff mittels Schwerkraft zugegeben werden kann. Während der Tisch 7a der Auflagefläche 7 des ersten Ausführungsbeispiels horizontal ausgerichtet war, ist der Tisch 7'a der Auflagefläche 7' des Ausführungsbeispiels gemäß Fig. 2 geneigt, wobei sich an den Tisch 7'a wiederum zwei Stufen 7'b, 7'c anordnen, die hier horizontal ausgebildet sind, wobei aber auch Stufen mit geneigten Auflageflächen denkbar sind. Der Neigungswinkel kann dabei im Bereich von -45° bis +50°, vorzugsweise im Bereich von 0 bis -30°, höchstvorzugsweise im Bereich von 0 bis -10°, liegen. Zweckmäßigerweise sollte die Neigung so groß sein, dass der Brennstoff nicht von selbst nach unten rutscht.

Weiterhin sind im dargestellten Ausführungsbeispiel Mittel 19' zum Fördern des Brennstoffs 11' entlang der Auflagefläche 7' vorgesehen, die hier durch einen Schieber gebildet werden. Im Bereich der Stufen sind wiederum Luftstoßgeräte 15', 16' vorgesehen. Diese schräge Anordnung des Tisches 7'a hat den Vorteil, dass die Förderung des Brennstoffs 11' erleichtert wird. Außerdem kann durch diese Geometrie der Konditionierungskammer 6' die Umlenkung eines Teils 1'a des mit dem Rohmaterial 4' vermischten Heißgases 1' erleichtert werden. Um diese Umlenkung weiter zu unterstützen sind im Bereich der Konditionierungskammer 6 Treibstrahldüsen 20' vorgesehen, die derart ausgerichtet sind, dass sie einen Teil der mit dem Rohmaterial 4' versetzten Heißgase 1' in die Konditionierungskammer 6' einsaugen.

Eine besonders effiziente Umsetzung des Brennstoffs im Bereich des Brennstoffkonditionierungsbereichs 5, 5' ergibt sich dann, wenn das Verhältnis von Höhe H des Brennstoffkonditionierungsbereichs zur Tiefe T der Auflagefläche zwischen 0,5 und 2, vorzugweise 0,75 und 1,5 beträgt. Wird die Auflagefläche 7, 7', wie bei den beiden Ausführungsbeispielen durch einen Tisch 7a, 7'a und wenigstens eine sich daran anschließende Stufe 7b, 7c, 7'b, 7'c gebildet, beträgt die Tiefe t der Stufe vorzugsweise 0,2 bis 1 mal, vorzugsweise 0,2 bis 0,6 mal der Tiefe t_{T} des Tisches. Für das Verhältnis von Breite zu Tiefe T der Auflagefläche 7, 7' hat sich ein Wert zwischen 0,5 und 2,5, vorzugsweise 1 und 2 als vorteilhaft herausgestellt.

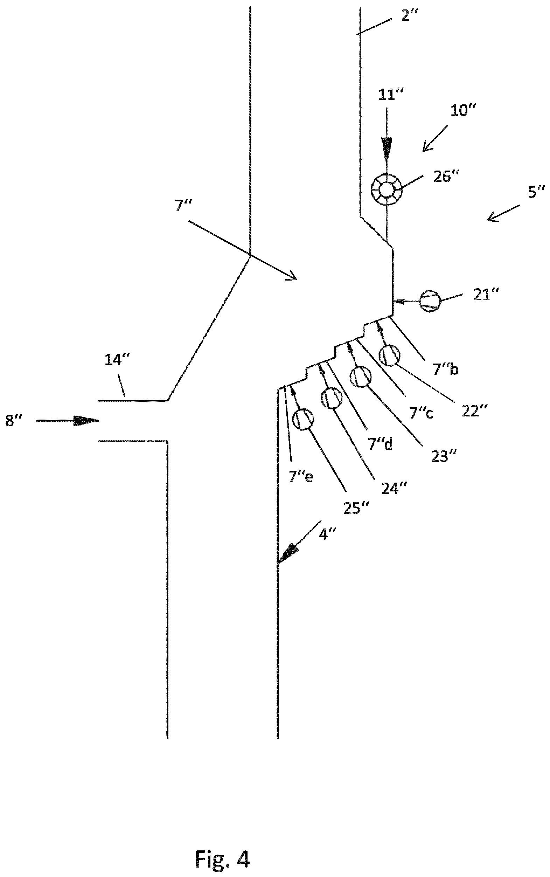

Beim Ausführungsbeispiel gemäß Fig. 4 wird der Brennstoffkonditionierungsbereich 5" durch eine in einem schräg zur Vertikalen angeordneten Abschnitt des Steigrohrs 2" angeordnete Konditionierungskammer 6" gebildet, wobei die Auflagefläche 7" für den Brennstoff zumindest teilweise durch einen ausgestellten Wandbereich des Steigrohres 2" gebildet wird, der im dargestellten Ausführungsbeispiel nur durch geneigt ausgebildete Stufen 7"b, 7"c, 7"d, 7"e gebildet wird. Durch die Neigung der Stufen sind zur Förderung des Brennstoffs einfache Gebläse ausreichend. Die Mittel 10' zur Zugabe des Brennstoffs 11" werden hier durch eine Zellenradschleuse gebildet.

Im Rahmen der Erfindung können die in den drei Ausführungsbeispielen gezeigten Ausgestaltungen, wie beispielsweise die Ausgestaltung der Auflagefläche oder die Art der Zuführung und Förderung des Brennstoffs beliebig miteinander kombiniert werden.

## Patentansprüche

1. Verfahren zur thermischen Behandlung von flugfähigem Rohmaterial (4, 4', 4"), wobei das Rohmaterial in ein von Heißgasen (1, 1', 1") durchströmtes Steigrohr (2, 2', 2") eingeführt und dort durch die Heißgase thermisch behandelt wird und wobei dem Steigrohr mindestens ein Brennstoff (11, 11', 11") zugeführt wird, wobei der Brennstoff zunächst in einem Brennstoff-Konditionierungsbereich (5, 5', 5") auf wenigstens einer Auflagefläche verweilt,
wobei der Brennstoff (11, 11', 11") im Brennstoff-Konditionierungsbereich mit einem Teil des mit dem Rohmaterial vermischten Heißgases (1a, 1'a, 1"a) in Kontakt kommt und dadurch getrocknet und/oder wenigstens teilweise entgast und/oder wenigstens teilweise umgesetzt wird und anschließend in das Steigrohr übergeht und **dadurch gekennzeichnet, dass**
der Brennstoff (11, 11', 11") im Brennstoff-Konditionierungsbereich mit heißen Gasen in Kontakt kommt, die zu wenigstens 50% durch einen Teil des mit dem Rohmaterial vermischten Heißgases (1a, 1'a, 1"a) gebildet werden, wobei
die wenigstens eine Auflagefläche (7, 7', 7") des Brennstoff-Konditionierungsbereichs in einer Konditionierungskammer (6, 6', 6") angeordnet ist, die offen in das Steigrohr (2, 2', 2") mündet, wobei ein Teil der mit dem Rohmaterial vermischten Heißgase (1, 1', 1") in die Konditionierungskammer umgelenkt und mit dem Brennstoff in Kontakt kommt.

2. Verfahren nach Anspruch 1, **dadurch gekennzeichnet, dass** der Brennstoff (11, 11', 11") mechanisch oder über Schwerkraft der Auflagefläche zugeführt wird.

3. Verfahren nach Anspruch 1, **dadurch gekennzeichnet, dass** der getrocknete und/oder wenigstens teilweise entgaste Brennstoff (11, 11', 11") mechanisch oder pneumatisch entlang der Auflagefläche gefördert und anschließend in das Steigrohr übergeht.

4. Verfahren nach Anspruch 1, **dadurch gekennzeichnet, dass** die Menge der mit dem Rohmaterial vermischten Heißgase (1'a), die mit dem Brennstoff (11',) im Brennstoff-Konditionierungsbereich (5') in Kontakt kommt, durch die Zugabe eines sauerstoffhaltigen Gases (20') gezielt eingestellt wird.

5. Verfahren nach Anspruch 1, **dadurch gekennzeichnet, dass** die Verbrennungsreaktion des auf der Auflagefläche befindlichem Brennstoffs (11, 11', 11") mittels inertem Material verlangsamt oder zum völligen Erliegen gebracht werden kann.

6. Anlage zur thermischen Behandlung von flugfähigem Rohmaterial (4, 4', 4") mit einem von Heißgasen (1, 1', 1") durchströmten Steigrohr (2, 2', 2"), Mitteln (3, 3', 3") zur Zugabe des Rohmaterials (4, 4', 4") und einem an das Steigrohr (2, 2', 2") angeschlossenen Brennstoff-Konditionierungsbereich (5, 5', 5"), der Mittel (10, 10', 10") zur Zugabe von Brennstoff (11, 11', 11"), wenigstens eine Auflagefläche (7, 7', 7") für den Brennstoff und Mittel zum Fördern des Brennstoffs entlang der Auflagefläche und zur Übergabe des Brennstoffs in das Steigrohr umfasst, wobei die wenigstens eine Auflagefläche (7, 7', 7") des Brennstoff-Konditionierungsbereichs in einer Konditionierungskammer (6, 6', 6") angeordnet ist, die offen in das Steigrohr (2, 2', 2") mündet,
**dadurch gekennzeichnet, dass** Umlenkmittel zur Umlenkung eines Teils der mit dem Rohmaterial vermischten Heißgase in den Brennstoffkonditionierungsbereich zur Trocknung und wenigstens teilweisen Entgasung und wenigstens teilweisen Umsetzung des Brennstoffs vorgesehen sind.

7. Anlage nach Anspruch 6, **dadurch gekennzeichnet, dass** die Mittel (10, 10', 10") zur Zugabe des Brennstoffs Schnecken und/oder Schieber und/oder Pumpen und/oder Stößel und/oder Schurren und/oder Zellenradschleusen und/oder ein Klappensystem umfassen.

8. Anlage nach Anspruch 6, **dadurch gekennzeichnet, dass** die Mittel (9') zum Fördern und Übergeben des Brennstoffs in das Steigrohr (2') in Form von Schiebern oder Stößeln zur mechanischen Förderung und/oder Luftstoßgeräten oder Gebläsen zur pneumatischen Förderung gebildet werden.

9. Anlage nach Anspruch 6, **dadurch gekennzeichnet, dass** im Brennstoff-Konditionierungsbereich (5') wenigstens eine Treibstrahldüse (20') zur Umlenkung des Teils der mit dem Rohmaterial vermischten Heißgase (1'a) in den Brennstoff-Konditionierungsbereich vorgesehen ist.

10. Anlage nach Anspruch 6, **dadurch gekennzeichnet, dass** das Verhältnis des Durchmessers (D) des Steigrohrs (2, 2', 2") zur Tiefe (T) der Auflagefläche (7, 7', 7") des Brennstoffs im Brennstoff-Konditionierungsbereich im Bereich von 5 > D/T > 1,5, vorzugsweise 3 >D/T > 1,5 liegt.

11. Anlage nach Anspruch 6, **dadurch gekennzeichnet, dass** die Auflagefläche (7, 7', 7") durch wenigstens zwei aufeinanderfolgende Stufen (7a, 7b, 7c; 7'a, 7'b, 7'c; 7"a, 7"b, 7"c) und/oder durch einen Tisch (7a, 7'a, 7"a) und wenigstens eine sich daran anschließende Stufe gebildet wird.

12. Anlage nach Anspruch 6, **dadurch gekennzeichnet, dass** das der Brennstoff-Konditionierungsbereich (5") durch eine in einem schräg zur Vertikalen angeordneten Abschnitt des Steigrohrs (2") ausgebildete Konditionierungskammer (6") gebildet wird und die wenigstens eine Auflagefläche (7") für den Brennstoff durch einen ausgestellten Wandbereich des Steigrohrs (2") gebildet wird.

## Claims

1. Method of thermal treatment of air-dispersible raw material (4, 4', 4"), wherein the raw material is introduced into a riser tube (2, 2', 2") through which hot gases (1, 1', 1") flow and is subjected to thermal treatment by the hot gases therein, and wherein the riser tube is supplied with at least one fuel (11, 11', 11"), wherein the fuel at first dwells within a fuel conditioning region (5, 5', 5") on at least one application surface,
wherein the fuel (11, 11', 11") in the fuel conditioning region comes into contact with a portion of the hot gas (1a, 1'a, 1" a) mixed with the raw material and hence is dried and/or at least partly degassed and/or at least partly converted and then goes into the riser tube, and **characterized in that**
the fuel (11, 11', 11") in the fuel conditioning region comes into contact with hot gases that are formed to an extent of at least 50% by a portion of the hot gas (1a, 1'a, 1" a) mixed with the raw material, wherein
the at least one application surface (7, 7', 7") of the fuel conditioning region is disposed in a conditioning chamber (6, 6', 6") that opens into the riser tube (2, 2', 2"), wherein a portion of the hot gases (1, 1', 1") mixed with the raw material is deflected into the conditioning chamber and comes into contact with the fuel.

2. Method according to Claim 1, **characterized in that** the fuel (11, 11', 11") is supplied to the application surface mechanically or via gravity.

3. Method according to Claim 1, **characterized in that** the dried and/or at least partly degassed fuel (11, 11', 11") is conveyed mechanically or pneumatically across the application surface and then goes into the riser tube.

4. Method according to Claim 1, **characterized in that** the amount of the hot gases (1'a) mixed with the raw material that comes into contact with the fuel (11') in the fuel conditioning region (5') is controlled via the addition of an oxygenous gas (20').

5. Method according to Claim 1, **characterized in that** the combustion reaction of the fuel (11, 11', 11") present on the application surface can be slowed or completely stopped by means of inert material.

6. Plant for thermal treatment of air-dispersible raw material (4, 4', 4") with a riser tube (2, 2', 2") through which hot gases (1, 1', 1") flow, means (3, 3', 3") of addition of the raw material (4, 4', 4") and a fuel conditioning region (5, 5', 5") adjoining the riser tube (2, 2', 2") and comprising means (10, 10', 10") of addition of fuel (11, 11', 11"), at least one application surface (7, 7', 7") for the fuel and means of conveying the fuel across the application surface and for transfer of the fuel to the riser tube, wherein the at least one application surface (7, 7', 7") of the fuel conditioning region is disposed in a conditioning chamber (6, 6', 6") that opens into the riser tube (2, 2', 2"), **characterized in that** deflecting means for deflecting a portion of the hot gases mixed with the raw material into the fuel conditioning region are provided for drying and at least partly degassing and at least partly converting the fuel.

7. Plant according to Claim 6, **characterized in that** the means (10, 10', 10") of addition of the fuel are screws and/or gate valves and/or pumps and/or tappets and/or chutes and/or star feeders and/or a flap valve system.

8. Plant according to Claim 6, **characterized in that** the means (9') for conveying and transferring the fuel into the riser tube (2') take the form of gate valves or tappets for mechanical conveying and/or air pulse devices or fans for pneumatic conveying.

9. Plant according to Claim 6, **characterized in that** at least one motive jet nozzle (20') for deflecting the portion of the hot gases (1'a) mixed with the raw material into the fuel conditioning region (5') is provided in the fuel conditioning region.

10. Plant according to Claim 6, **characterized in that** the ratio of the diameter (D) of the riser tube (2, 2', 2") to the depth (T) of the application surface (7, 7', 7") of the fuel in the fuel conditioning region is in the range of 5 > D/T > 1.5, preferably 3 > D/T > 1.5.

11. Plant according to Claim 6, **characterized in that** the application surface (7, 7', 7") is formed by at least two successive stages (7a, 7b, 7c; 7'a, 7'b, 7'c; 7"a, 7"b, 7" c) and/or by a table (7a, 7'a, 7" a) and at least one adjoining stage.

12. Plant according to Claim 6, **characterized in that** the fuel conditioning region (5") is formed by a conditioning chamber (6") formed in a section of the riser tube (2") arranged obliquely to the vertical and the at least one application surface (7") for the fuel is formed by a flared wall region of the riser tube (2").

## Revendications

1. Procédé de traitement thermique d'un matériau brut dispersible (4, 4', 4"), le matériau brut étant introduit dans un tube montant (2, 2', 2") traversé par des gaz chauds (1, 1', 1") et y étant traité thermiquement par les gaz chauds, et au moins un combustible (11, 11', 11") étant introduit dans le tube montant, le combustible séjournant tout d'abord dans une zone de conditionnement du combustible (5, 5', 5") sur au moins une surface support,
le combustible (11, 11', 11") rentrant en contact dans la zone de conditionnement du combustible avec une partie du gaz chaud mélangé avec le matériau brut (1a, 1'a, 1"a) et étant ainsi séché et/ou au moins partiellement dégazé et/ou au moins partiellement mis en réaction, puis passant dans le tube montant, **caractérisé en ce que**
le combustible (11, 11', 11") rentre en contact dans la zone de conditionnement du combustible avec des gaz chauds, qui sont formés à hauteur d'au moins 50 % par une partie du gaz chaud mélangé avec le matériau brut (1a, 1'a, 1"a),
ladite au moins une surface support (7, 7', 7") de la zone de conditionnement du combustible étant agencée dans une chambre de conditionnement (6, 6', 6"), qui débouche sous forme ouverte dans le tube montant (2, 2', 2"), une partie des gaz chauds mélangés avec le matériau brut (1, 1', 1") étant déviée dans la chambre de conditionnement et rentrant en contact avec le combustible.

2. Procédé selon la revendication 1, **caractérisé en ce que** le combustible (11, 11', 11") est introduit mécaniquement ou par la force de pesanteur sur la surface support.

3. Procédé selon la revendication 1, **caractérisé en ce que** le combustible séché et/ou au moins partiellement dégazé (11, 11', 11") est transporté mécaniquement ou pneumatiquement le long de la surface support, puis passe dans le tube montant.

4. Procédé selon la revendication 1, **caractérisé en ce que** la quantité des gaz chauds mélangés avec le matériau brut (1'a) qui rentre en contact avec le combustible (11') dans la zone de conditionnement du combustible (5') est ajustée de manière ciblée par l'ajout d'un gaz contenant de l'oxygène (20').

5. Procédé selon la revendication 1, **caractérisé en ce que** la réaction de combustion du combustible (11, 11', 11") qui se trouve sur la surface support peut être ralentie ou complètement arrêtée au moyen d'un matériau inerte.

6. Unité pour le traitement thermique d'un matériau brut dispersible (4, 4', 4"), comprenant un tube montant (2, 2', 2") traversé par des gaz chauds (1, 1', 1"), des moyens (3, 3', 3") pour l'ajout du matériau brut (4, 4', 4") et une zone de conditionnement du combustible (5, 5', 5") raccordée au tube montant (2, 2', 2"), qui comprend des moyens (10, 10', 10") pour l'ajout du combustible (11, 11', 11"), au moins une surface support (7, 7', 7") pour le combustible, et des moyens pour le transport du combustible le long de la surface support et pour le passage du combustible dans le tube montant, ladite au moins une surface support (7, 7', 7") de la zone de conditionnement du combustible étant agencée dans une chambre de conditionnement (6, 6', 6"), qui débouche sous forme ouverte dans le tube montant (2, 2', 2"), **caractérisée en ce que** des moyens de déviation pour la déviation d'une partie des gaz chauds mélangés avec le matériau brut dans la zone de conditionnement du combustible pour le séchage et le dégazage au moins partiel et la mise en réaction au moins partielle du combustible sont prévus.

7. Unité selon la revendication 6, **caractérisée en ce que** les moyens (10, 10', 10") pour l'ajout du combustible comprennent des vis et/ou des glissières et/ou des pompes et/ou des poussoirs et/ou des rampes et/ou des vannes rotatives et/ou un système de clapets.

8. Unité selon la revendication 6, **caractérisée en ce que** les moyens (9') pour le transport et le passage du combustible dans le tube montant (2') sont configurés sous la forme de glissières ou de poussoirs pour le transport mécanique et/ou d'appareils à jet d'air ou de ventilateurs pour le transport pneumatique.

9. Unité selon la revendication 6, **caractérisée en ce qu'**au moins une buse à jet d'entraînement (20') pour la déviation de la partie des gaz chauds mélangés avec le matériau brut (1'a) dans la zone de conditionnement du combustible est prévue dans la zone de conditionnement du combustible (5').

10. Unité selon la revendication 6, **caractérisée en ce que** le rapport entre le diamètre (D) du tube montant (2, 2', 2") et la profondeur (T) de la surface support (7, 7', 7") du combustible dans la zone de conditionnement du combustible se situe dans la plage suivante : 5 > D/T > 1,5, de préférence 3 > D/T > 1,5.

11. Unité selon la revendication 6, **caractérisée en ce que** la surface support (7, 7', 7") est formée par au moins deux étages successifs (7a, 7b, 7c; 7'a, 7'b, 7'c; 7''a, 7"b, 7"c) et/ou par un plateau (7a, 7'a, 7"a) et au moins un étage qui s'ensuit.

12. Unité selon la revendication 6, **caractérisée en ce que** la zone de conditionnement du combustible (5") est formée par une chambre de conditionnement (6") configurée dans une section du tube montant (2") agencée en biais par rapport à la verticale, et ladite au moins une surface support (7") pour le combustible est formée par une zone de bord évasée du tube montant (2").
